Europäisches Patentamt

European Patent Office

Office européen des brevets

(19)

(11) Veröffentlichungsnummer: **0 009 726
B1**

(12) EUROPÄISCHE PATENTSCHRIFT

(45) Veröffentlichungstag der Patentschrift:
27.01.82

(21) Anmeldenummer: 79103549.6

(22) Anmeldetag: 20.09.79

(51) Int. Cl.³: **B 61 F 5/24,** F 16 F 1/26

(54) Drehhemmung für Einzel- und Doppelachsiaufwerke von Schienenfahrzeugen.

(30) Priorität: 28.09.78 DE 2842211

(43) Veröffentlichungstag der Anmeldung:
16.04.80 Patentblatt 80/8

(45) Bekanntmachung des Hinweises auf die Patenterteilung:
27.01.82 Patentblatt 82/4

(84) Benannte Vertragsstaaten:
AT CH DE FR GB IT NL SE

(56) Entgegenhaltungen:
DE-C-435 556
DE-C-921 374
GB-A-3 010/1911
GB-A-278 901

(73) Patentinhaber: Waggon Union GmbH, D-5900 Siegen (DE)

(72) Erfinder: Ahlborn, Günther, Holunderweg 26,
D-5900 Siegen 21 (DE)
Erfinder: Fiedler, Eberhard, Hofgutstrasse 15,.
D-5900 Siegen 1 (DE)
Erfinder: Lohmann, Alfred, Rinsdorfer Strasse 17,
D-5900 Siegen 31 (DE)
Erfinder: Troche, Gerhard, Kantstrasse 16,
D-4972 Löhne 1 (DE)

(74) Vertreter: Eberhard, Friedrich, Dr., Am Thyssenhaus 1,
D-4300 Essen (DE)

## Drehhemmung für Einzel- und Doppelachslaufwerke von Schienenfahrzeugen

Die Erfindung betrifft eine Drehhemmung für Einzel- und Doppelachslaufwerke von Schienenfahrzeugen, bei denen die Achse bzw. das Doppelachslaufwerk über Blatttragfedern und Schakengehänge an Federböcken des Schienenfahrzeugs aufgehängt ist.

Es ist bekannt, bei Schienenfahrzeugen, die als zweiachsige Wagen ausgebildet sind, jede Einzelachse über Blatttragfedern und Federgehänge bzw. Schakengehänge an Federböcken des Schienenfahrzeugs aufzuhängen. Die Federoder Schakengehänge sind dabei von den Federaugen der Blatttragfedern zu den Federböcken hin schräg nach unten von der zugehörigen Achse wegweisend angeordnet. Diese schräge Aufhängung der Feder- oder Schakengehänge, die sowohl als Einzel- oder Doppelschakengehänge ausgebildet sein können, dient der Vergrößerung der auf die Achse einwirkenden Rückstellkraft beim Ausdrehen der Achse infolge ihres Sinuslaufes in gradem Gleis oder nach Durchfahren von Gleisbögen. Das Pendeln der Feder- oder Schakengehänge muß dabei sowohl in Wagenquer- als auch in Wagenlängsrichtung erfolgen. Hierzu ist die Rückstellung der Gehänge in der Regel entkoppelt, d. h. durch Anwendung von langen Schaken oder Doppelschakengehängen erfolgen unterschiedliche Rückstellmomente in Wagenlängs- und in Wagenquerrichtung. Für einen ruhigen Lauf der Achse bei höheren Geschwindigkeiten ist ein hohes Rückstellmoment in Wagenlängsrichtung erforderlich, um die Frequenz des Sinuslaufes der Achsen relativ niedrig zu halten. Dieses ist in der Regel erforderlich, da bei Einzelachslaufwerken die Achsen aus Kostengründen nicht mit den Sinuslauf dämpfenden Dämpfungselementen versehen werden.

In Bezug auf das lauftechnische Verhalten sind den Einzelachslaufwerken sogenannte Doppelachslaufwerke gleichgeartet. Diese Doppelachslaufwerke bestehen dabei aus zwei Radsätzen mit kleinem Achsstand, wobei die Radsätze über Achslager fest in einen Laufwerkrahmen eingespannt sind und das Laufwerk mit dem Fahrzeugrahmen lediglich über eine Blatttragfeder oder ähnlichem je Radpaar und Schakengehänge mit dem Fahrzeugrahmen verbunden sind. Jede Blatttragfeder ist dabei mittig zwischen den Achsen am Laufwerkrahmen fest gelagert. Die einseitig in den Federaugen der Blatttragfeder aufgehängten Schakengehänge sind mit ihrem anderen Ende gelenkig an Federböcken des Fahrzeugrahmens befestigt. Ein am Fahrzeugrahmen angeordneter Achshalter führt dabei mit Längs- und Querspiel, das den horizontalen Ausschlag des Doppelachslaufwerks gewährleistet, das Doppelachslaufwerk.

Bei diesen Doppelachslaufwerken kann jedoch bei kleineren Gleisbögen die Ausdrehung der Blatttragfeder im Bogenlauf des Doppelachslaufwerks so groß sein, daß die normale Schrägstellung der Feder- bzw. Schakengehänge zur Rückstellung des Doppelachslaufwerks nicht mehr gewählt werden kann. Bei der Ausdrehung des Doppelachslaufwerks im Bogenlauf würde eine zu große Verspannung der Blatttragfeder infolge übermäßiger Schrägstellung der Feder- bzw. Schakengehänge erfolgen. Es ist nun bekannt, mittels verschiedener Hilfsmittel eine Entkoppelung der Feder- bzw. Schakengehänge der Blatttragfeder zu bewirken, um die erforderlichen Aussschlagwege zu kompensieren. Diese Lösungen sind jedoch kompliziert und erfordern aufwendige Dämpfungselemente, die in der Regel hydraulisch oder mechanisch arbeiten, um eine Drehhemmung zu erzeugen, die einen einwandfreien Geradeauslauf bei hohen Geschwindigkeiten des Schienenfahrzeugs gewährleistet.

Ein Nachteil der Doppelachslaufwerke mit schrägstehenden Feder- oder Schakengehängen besteht auch noch darin, daß bei der Ausdrehung des Doppelachslaufwerks im Gleisbogen eine sehr hohe Spurkranzseitenbelastung der Radsätze erfolgt. Ebenfalls ist nachteilig, daß eine ganz oder teilweise Entlastung eines Rades des Doppelachslaufwerks im Gleisbogen erfolgen kann.

Die Aufgabe vorliegender Erfindung bestand nun darin, für Einzel- und insbesondere Doppelachslaufwerke eine Aufhängung der Blatttragfedern zu finden, die die Ausdrehung im Gleisbogen nicht behindert und die die erforderliche Drehhemmung im Geradeauslauf gewährleistet, wobei auf eine wirtschaftliche Gesamtgestaltung besonderer Wert gelegt wurde.

Gemäß der Erfindung wird diese Aufgabe bei Einzel- und Doppelachslaufwerken der eingangs genannten Art dadurch gelöst, daß die Schakengehänge bei der Einfederung der Blatttragfeder und/oder der Ausdrehung der Achse bzw. des Doppelachslaufwerks um ihre vertikale Stellung pendelnd aufgehängt sind und daß entweder an mindestens einem Federauge jeder Blatttragfeder ein über das zugehörige Federauge der Blatttragfeder und zwischen die Schakengehänge dieses Federauges ragendes Druckstück angeordnet ist, das mit seiner Oberseite unter dem Untergestell des Schienenfahrzeuges anliegt, oder daß vertikal über jeder Blatttragfeder und parallel zu dieser ein Druckstück angeordnet ist, das mit seinen Längsenden zwischen den Schakengehängen auf den Federaugen der Blatttragfeder federnd aufliegt und im Bereich seiner Längsmitte unter dem Untergestell des Schienenfahrzeuges anliegt.

Der Vorteil dieser erfindungsgemäßen Ausführung liegt darin, daß bei einer horizontalen Auslenkung der Blatttragfeder keine unzulässige Verspannung der Blatttragfeder und damit des Laufwerks erfolgt und daß mit einfachen Mitteln eine Drehhemmung erzielt wird. Ein weiterer Vorteil der Erfindung liegt darin, daß bei einer Ausdrehung des Laufwerks und der dadurch erfolgenden Schrägstellung der Schakengehänge in Längsrichtung das Druckstück von dem Untergestell des Schienenfahrzeugs abgehoben werden kann, so daß im kritischen Bereich der hohen Spurkranzseitenbelastung beim Bogenlauf die zusätzliche Drehhemmung und damit die zusätzliche Belastung des Spurkranzes der Radsätze selbsttätig aufgehoben wird.

Das Druckstück ist nach der ersten Ausführung der Erfindung mittels der Kraft einer Feder gegen das Untergestell angepreßt. Nach einem Ausführungsbeispiel dieser Erfindung ist das Druckstück als einseitig eingespannte Blattfeder ausgebildet. Zur Einstellung des Anpreßdrucks des Druckstücks an das Untergestell kann das Druckstück höhenveränderlich an der Blatttragfeder befestigt werden. Weiter kann zur Einstellung des Anpreßdruckes des Druckstücks an das Untergestell die Feder des Drückstücks einstellbar ausgebildet werden. In zweckmäßiger Ausgestaltung dieser Ausführung ist an dem Untergestell zur Anlage des Druckstücks bei diesem Ausführungsbeispiel eine Schleißplatte vorgesehen.

Nach dem zweiten Ausführungsbeispiel der Erfindung ist das Druckstück als Blattfeder ausgebildet und im Bereich seiner Längsmitte am Untergestell befestigt.

Diese vorstehend beschriebene Ausführung kann so abgewandelt sein, daß das Druckstück als Blattfeder ausgebildet ist, an den Federaugen der Blatttragfeder befestigt oder mit Spiel gegen Längsverschiebung gesichert ist und mit seiner Längsmitte gleitend gegen das Untergestell direkt oder unter Zwischenschaltung einer Schleißplatte federnd anliegt.

Einzelheiten der Erfindung sind in Ausführungsbeispielen anhand der Zeichnungen erläutert. Es zeigt

Fig. 1 die Seitenansicht eines Doppelachslaufwerks mit einer Drehhemmung nach der Erfindung,

Fig. 2 die Draufsicht auf das Doppelachslaufwerk nach Fig. 1, z. T. schematisch,

Fig. 3 einen vergrößerten Ausschnitt der Fig. 1,

Fig. 4 einen Schnitt nach Linie IV-IV der Fig. 3,

Fig. 5 die Seitenansicht eines Doppelachslaufwerks nach einem zweiten Ausführungsbeispiel der Erfindung in schematischer Darstellung.

Bei allen Ausführungsbeispielen der Erfindung sind die Radsätze 1 über Achslager 2 fest in dem Laufwerkrahmen 3 eingespannt. Mittig an dem Laufwerkrahmen 3 sind außen Blatttragfedern 4 fest gelagert. Die schematisch dargestellten und an dem Untergestell 14 des Schienenfahrzeugs befestigten Achshalter 5 führen mit Spiel das Laufwerk über die Achshalterführungen 6 des Laufwerks. An den Federaugen 7 der Blatttragfeder 4 sind vertikal und gelenkig Federschaken 8 gelagert, die an ihrem nach unten ragenden freien Ende an nicht dargestellten Federböcken des Untergestells des Schienenfahrzeugs ebenfalls gelenkig gelagert sind.

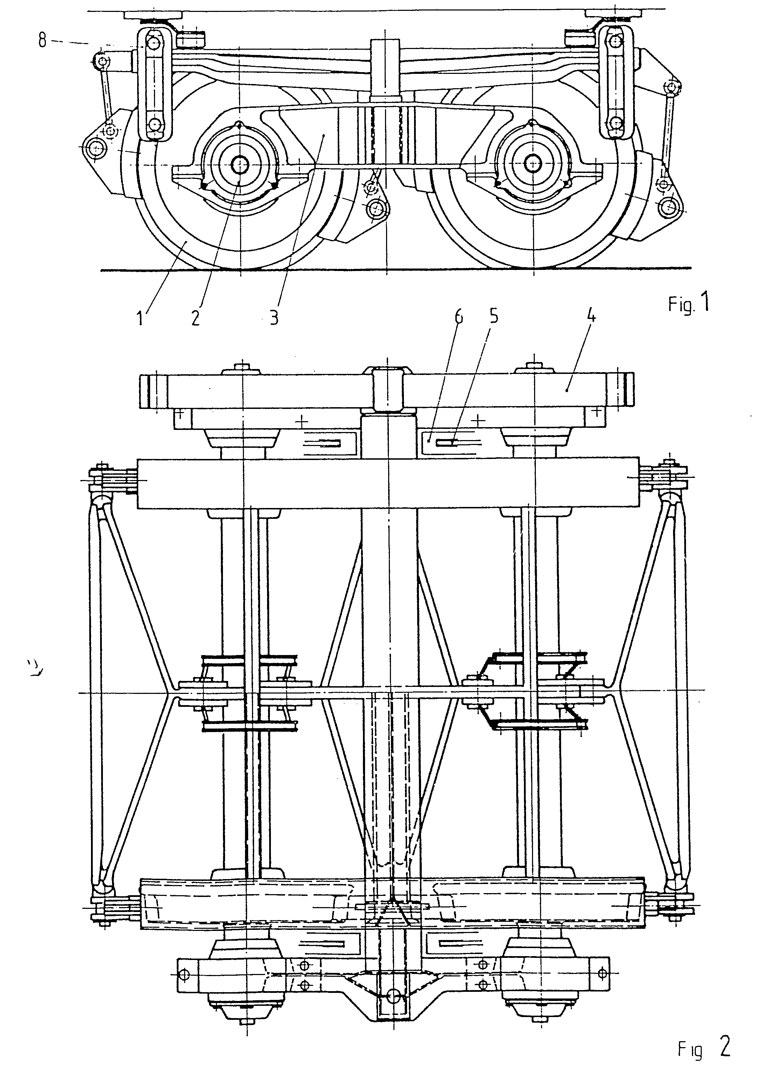

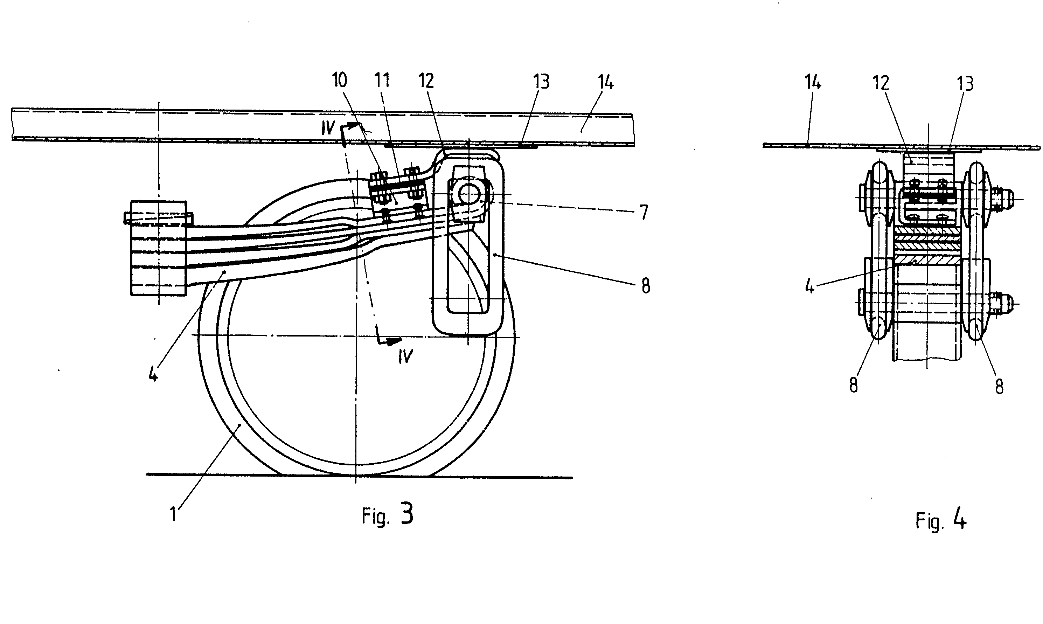

Bei dem in den Fig. 1 bis 4 dargestellten Ausführungsbeispiel ist nahe jedem Längsende jeder Blatttragfeder 4 auf dieser ein Lagerstück 10 befestigt, auf dem lösbar und über Zwischenlagen 11 höhenveränderlich einstellbar ein Druckstück 12 befestigt ist. Das Druckstück 12 ist in dem dargestellten Ausführungsbeispiel als einseitig eingespannte Blattfeder ausgebildet und ragt mit seinem freien Ende zwischen die Schakengehänge 8 über das Federauge 7 der Blatttragfeder 4. An diesem über das Federauge 7 ragenden Ende ist das Druckstück 12 auf seiner Oberseite flächig ausgebildet und liegt mit eine der Drehhemmung entsprechenden Vorspannung unter einem Schleißstück 13 des Untergestells 14 des Schienenfahrzeugs an.

Gemäß einer nicht dargestellten Variation kann bei diesem Ausführungsbeispiel das Druckstück 12 auch gegen die Kraft einer Feder, die ebenfalls nach einem weiteren Ausführungsbeispiel einstellbar ausgebildet sein kann, gegen das Schleißstück 13 des Untergestells 14 angepreßt sein.

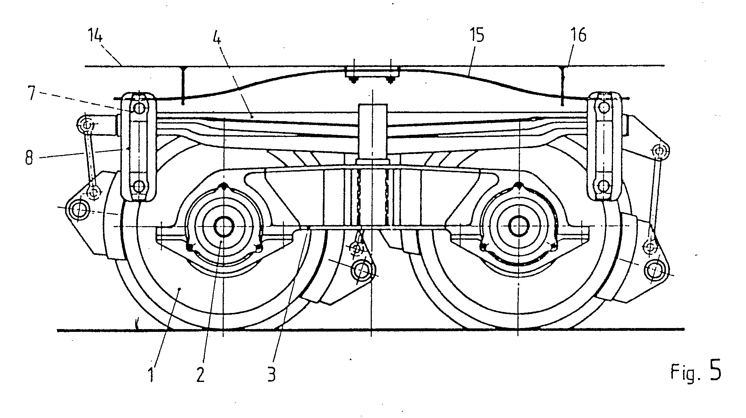

Bei der in Fig. 5 dargestellten Ausführung ist vertikal über jeder Blatttragfeder 4 und parallel zu dieser ein Druckstück 15 angeordnet, das mit seinen Längsenden zwischen den Schakengehängen 8 auf den Federaugen 7 der Blatttragfeder 4 aufliegt und im Bereich seiner Längsmitte unter dem Untergestell 14 des Schienenfahrzeugs befestigt ist. Das Druckstück 5 ist dabei als Blattfeder ausgebildet und mit definierter Vorspannung versehen. Die Längsenden des Druckstücks 15 und die Federaugen 7 der Blatttragfeder sind dabei in ihrem Querschnitt vergrößert, um den durch die Verschiebung des Druckstücks 15 auf den Federaugen 7 entstehenden Verschleiß aufzunehmen.

Diese Ausführung der Erfindung kann auch so abgeändert sein, daß das Druckstück 15 gleitend unter dem Untergestell 14 direkt oder unter Zwischenschaltung einer Schleißplatte anliegt. Bei dieser Ausführung ist das Druckstück 15 an mindestens einem Federauge 7 befestigt oder mit Längsspiel gegen Längsverschiebung gesichert gelagert.

Bei beiden vorstehend beschriebenen Ausführungen sind Führungen 16 am Untergestell 14 angeordnet, die das Druckstück 15 seitlich führen.

**Patentansprüche**

1. Drehhemmung für Einzel- und Doppelachslaufwerke von Schienenfahrzeugen, bei denen die Achse bzw. das Doppelachslaufwerk über Blatttragfedern (4) und Schakengehänge (8) an Federböcken des Schienenfahrzeugs aufgehängt ist, dadurch gekennzeichnet, daß die Schakengehänge (8) bei der Einfederung der Blatttragfeder (4) und/oder der Ausdrehung der Achse bzw. des Doppelachslaufwerks um ihre vertikale Stellung pendelnd aufgehängt sind und daß an mindestens einem Federauge (7) jeder Blatttragfeder (4) ein über das zugehörige Federauge (7) der Blatttragfeder (4) und zwischen die Schakengehänge (8) dieses Federauges (7) ragendes Druckstück (12) angeordnet ist, das mit seiner Oberseite unter dem Untergestell (14) des Schienenfahrzeuges anliegt.

2. Drehhemmung für Einzel- und Doppelachslaufwerke von Schienenfahrzeugen, bei denen die Achse bzw. das Doppelachslaufwerk über Blatttragfedern (4) und Schakengehänge (8) an Federböcken des Schienenfahrzeugs aufgehängt ist, dadurch gekennzeichnet, daß die Schakengehänge (8) bei der Einfederung der Blatttragfeder (4) und/oder der Ausdrehung der Achse bzw. des Doppelachslaufwerks um ihre vertikale Stellung pendelnd aufgehängt sind und daß vertikal über jeder Blatttragfeder (4) und parallel zu dieser ein Druckstück (15) angeordnet ist, das mit seinen Längsenden zwischen den Schakengehängen (8) auf den Federaugen (7) der Blatttragfeder (4) federnd aufliegt und im Bereich seiner Längsmitte unter dem Untergestell (14) des Schienenfahrzeugs anliegt.

3. Drehhemmung nach Anspruch 1, dadurch gekennzeichnet, daß das Druckstück (12) mittels der Kraft einer Feder gegen das Untergestell (14) angepreßt ist.

4. Drehhemmung nach Anspruch 1, dadurch gekennzeichnet, daß das Druckstück (12) als einseitig eingespannte Blattfeder ausgebildet ist.

5. Drehhemmung nach den Ansprüchen 1 und 3, dadurch gekennzeichnet, daß das Druckstück (12) höhenveränderlich an der Blatttragfeder (4) befestigt ist.

6. Drehhemmung nach den Ansprüchen 1, 3 und 5, dadurch gekennzeichnet, daß die Feder des Druckstücks (12) einstellbar ausgebildet ist.

7. Drehhemmung nach den Ansprüchen 1 und 3 bis 6, dadurch gekennzeichnet, daß an dem Untergestell (14) zur Anlage des Druckstücks (12) eine Schleißplatte (13) vorgesehen ist.

8. Drehhemmung nach Anspruch 2, dadurch gekennzeichnet, daß das Druckstück (15) als Blattfeder ausgebildet und im Bereich seiner Längsmitte am Untergestell (14) befestigt ist.

9. Drehhemmung nach Anspruch 2, dadurch gekennzeichnet, daß das Druckstück (15) als Blattfeder ausgebildet, an den Federaugen der Blatttragfeder (4) befestigt oder mit Spiel gegen Längsverschiebung gesichert ist und mit seiner Längsmitte gleitend gegen das Untergestell (14) direkt oder unter Zwischenschaltung einer Schleißplatte federnd anliegt.

10. Drehhemmung nach dem Anspruch 8 oder 9, dadurch gekennzeichnet, daß das Druckstück (15) durch an dem Untergestell (14) angeordnete Führungen (16) seitlich geführt ist.

## Claims

1. Slewing restraint for single-axle running gear and twin-axle running gear of rail vehicles, wherein the axle or the twin-axle running gear is suspended via bearing leaf springs (4) and shackle hangers (8) on spring supports of the rail vehicle, characterised in that the shackle hangers (8) are suspended to swing about their vertical position when the bearing leaf spring (4) is deflected and/or the axle or the twin-axle running gear slews, and in that, on at least one spring eye (7) of each bearing leaf spring (4), a thrust member (12) is provided which protrudes beyond the associated spring eye (7) of the bearing leaf spring (4) and in between the shackle hangers (8) of this spring eye (7), and the upper side of which abuts below the underframe (14) of the rail vehicle.

2. Slewing restraint for single-axle running gear and twin-axle running gear of rail vehicles, wherein the axle or the twin-axle running gear is suspended via bearing leaf springs (4) and shackle hangers (8) on spring supports of the rail vehicle, characterised in that the shackle hangers (8) are suspended to swing about their vertical position when the bearing leaf spring (4) is deflected and/or the axle or the twin-axle running gear slews, and in that, vertically above each bearing leaf spring (4) and parallel to the latter, a thrust member (15) is provided which, with its longitudinal end, resiliently rests, between the shackle hangers (8), on the spring eyes (7) of the bearing leaf spring (4) and, in the zone of its longitudinal centre, abuts below the underframe (14) of the rail vehicle.

3. Slewing restraint according to claim 1, characterised in that the thrust member (12) is pressed against the underframe (14) by means of the force of a spring.

4. Slewing restraint according to claim 1, characterised in that the thrust member (12) is formed as a leaf spring clamped on one side.

5. Slewing restraint according to claims 1 and 3, characterised in that the thrust member (12) is fixed to the bearing leaf spring (4) in such a way that its height is adjustable.

6. Slewing restraint according to claims 1, 3 and 5, characterised in that the spring of the thrust member (12) is designed to be adjustable.

7. Slewing restraint according to claims 1 and 3 to 6, characterised in that, for the abutment of the thrust member (12), a wearing plate (13) is provided on the underframe (14).

8. Slewing restraint according to claim 2, characterised in that the thrust member (15) is formed as a leaf spring and, in the zone of its longitudinal centre, is fixed to the underframe (14).

9. Slewing restraint according to claim 2, characterised in that the thrust member (15) is formed as a leaf spring, is fixed to the spring eyes of the bearing leaf spring (4) or is secured with a clearance against longitudinal shift and, with its longitudinal centre, resiliently abuts slidingly on the underframe (14), directly or with the interposition of a wearing plate.

10. Slewing restraint according to claim 8 or 9, characterised in that the thrust member (15) is laterally guided by means of guides (16) fitted on the underframe (14).

## Revendications

1. Dispositif d'enrayage du pivotement de trains de roulement à un ou deux essieux de véhicules sur rails, dans lequel l'essieu, ou le train de roulement à deux essieux, est suspendu par l'intermédiaire de ressorts porteurs à lames (4) et d'anneaux de suspension (8) aux mains de ressorts du véhiculeà rail, caractérisé par le fait que les anneaux de suspension (8) sont montés de façon à osciller autour de leur de leur position verticale, sous l'effet des variations de tension du ressort porteur à lames (4) et/ou du pivotement de l'essieu ou du train de roulement à deux essieux, et un élément de pression (12) est prévu à au moins l'une des douilles de ressort (7) de chaque ressort porteur à lames (4), ledit élément (12) s'étendant au-dessus de ladite douille de ressort (7) du ressort porteur à lames (4) et entre les anneaux de suspension (8) de ladite douille (7) et s'appuyant par sa face supérieure sous le châssis (14) du véhicule sur rails.

2. Dispositif d'enrayage du pivotement de trains de roulement à un ou deux essieux de véhicules sur rails, dans lequel l'essieu, ou le train de roulement à deux essieux, est suspendu par l'intermédiaire de ressorts porteurs à lames (4) et d'anneaux de suspension (8) aux mains de ressorts du véhicule à rail, caractérisé par le fait que les anneaux de suspension sont montés de façon à osciller autour de leur position verticale, sous l'effet des variations de tension du ressort porteur à lames (4) et/ou du pivotement de l'essieu ou du train de roulement à deux essieux, et un élément de pression (15) est disposé à la verticale de chaque ressort porteur à lames (4) et s'étend parallèlement audit ressort, cet élément (15) reposant, par ses extrémités longitudinales, entre les anneaux de`suspension (8), sur les douilles de ressort (7) du ressort porteur à lames (4) et étant fixé, dans sa zone centrale, sous le châssis (14) du véhicule sur rails.

3. Dispositif selon la revendication 1, caractérisé par le fait que l'élément de pression (12) est pressé contre le châssis (14) sous l'action de la force d'un ressort.

4. Dispositif selon la revendication 1, caractérisé par le fait que l'élément de pression (12) se présente sous la forme d'un ressort à lames encastré par l'une de ses extrémités.

5. Dispositif selon les revendications 1 et 3, caractérisé par le fait que l'élément de pression (12) est fixé au ressort porteur à lames (4) de façon réglable en hauteur.

6. Dispositif selon les revendications 1, 3 et 5, caractérisé par le fait que le ressort de l'élément de pression (12) est réglable.

7. Dispositif selon les revendications 1 et 3 à 6, caractérisé par le fait qu'est prévue sur le châssis (14) une plaquette d'usure (13) destinée à l'appui de l'élément de pression (12).

8. Dispositif selon la revendication 2, caractérisé par le fait que l'élément de pression (15) se présente sous la forme d'un ressort à lames, et est fixé au châssis (14) dans sa zone centrale.

9. Dispositif selon la revendication 2, caractérisé par le fait que l'élément de pression (15), sous forme d'un ressort à lames, est fixé sur les douilles de ressort du ressort porteur à lames (4) ou bien est monté avec jeu pour éviter les frottements, et il s'applique de façon coulissante et élastique, par sa partie centrale longitudinale contre le châssis (14), soit directement, soit par l'intermédiaire d'une plaquette d'usure.

10. Dispositif selon les revendications 8 ou 9, caractérisé par le fait que l'élément de pression (15) est guidé latèralement par des glissières (16) montées sur le châssis (14).

Fig. 1

Fig 2

Fig. 3

Fig. 4

Fig. 5